# EUROPÄISCHE PATENTSCHRIFT

(11) **EP 4 148 754 B1**
(45) Veröffentlichungstag und Bekanntmachung des Hinweises auf die Patenterteilung: **10.07.2024**
(21) Anmeldenummer: 22190572.2
(22) Anmeldetag: 16.08.2022
(51) Int. Cl.: H01G 4/224, H01G 9/08, H01G 9/26, H01G 9/28, H01G 11/18, H01G 11/78, H01G 2/14, H01G 4/38, H01G 4/40, H01G 11/14, H01G 9/00, H01G 9/12, H01G 2/10

(54) **VORRICHTUNG ZUR ÜBERWACHUNG EINES LEISTUNGSKONDENSATORS UND ADAPTER FÜR EINE SOLCHE VORRICHTUNG**
DEVICE FOR MONITORING A POWER CAPACITOR AND ADAPTER FOR SUCH A DEVICE
DISPOSITIF DE SURVEILLANCE D'UN CONDENSATEUR DE PUISSANCE ET ADAPTATEUR POUR UN TEL DISPOSITIF

(30) Priorität: 08.09.2021 DE 102021209893
(43) Veröffentlichungstag der Anmeldung: 15.03.2023
(73) Patentinhaber: Siemens Mobility GmbH, 81739 München (DE)
(72) Erfinder: Ackermann, Markus, 91301 Forchheim (DE)
(74) Vertreter: Siemens Patent Attorneys

(56) Entgegenhaltungen:
- KR-A- 20130 076 389
- US-A1- 2019 273 374

## Beschreibung

Die Erfindung betrifft eine Vorrichtung zur Überwachung eines Leistungskondensators, wobei der Adapter dazu dient, eine Sensoreinrichtung mit einem Gehäuse des Leistungskondensators zu verbinden, um eine verlässliche Erfassung eines Gasdrucks in dem Gehäuseinnenraum des Leistungskondensators durch die Sensoreinrichtung zu gewährleisten. Die Erfindung betrifft ebenfalls einen für eine solche Vorrichtung geeignet ausgestalteten Adapter.

In Antriebssträngen elektrisch angetriebener Schienenfahrzeuge und speziell in Umrichtern solcher Antriebsstränge werden Leistungskondensatoren eingesetzt, die beispielsweise die Funktion eines Zwischenkreiskondensators übernehmen. Typischerweise liegen an Zwischenkreiskondensatoren eines Gleichspannungszwischenkreises Gleichspannungen größer 1kV an.

Derartige Leistungskondensatoren sind üblicherweise als Folienkondensatoren mit einem Dielektrikum aus einem Kunststoffmaterial wie beispielsweise Polypropylen oder Polyester ausgestaltet. Neben dem Fehlerfall eines Kurzschlusses, welcher mittels einer geeigneten Überwachung des Stromkreises erkannt werden kann, ist das Auftreten eines Fehlerfalls des Leistungskondensators auch aufgrund eines Alterungsprozesses der Metallisierung des Dielektrikums möglich. Dabei führt eine Korrosion der Metallisierung aus beispielsweise Aluminium oder Zink über die Betriebszeit des Leistungskondensators zu steigenden Stromwärmeverlusten, wodurch eine Selbstheilfähigkeit von Fehlerstellen der Metallisierung eingeschränkt wird. Dieser Verlust der Selbstheilfähigkeit kann zu einem Schmelzen des Dielektrikums und einer Pyrolyse führen, bei welcher gasförmige Kohlenwasserstoffe entstehen, die bei Kontakt mit Sauerstoff der Außenluft eine explosive Atmosphäre bilden können. Ein Leistungskondensator sollte daher ergänzend hinsichtlich des Fehlerfalls einer exzessiven Bildung von Pyrolysegasen in dem Gehäuse überwacht werden, um mittels geeigneter Maßnahmen deren Freisetzung aufgrund eines beispielsweise durch erhöhten Gasdruck verursachten Berstens des Gehäuses verhindern zu können.

Für eine Überwachung hinsichtlich dieses Fehlerfalls können die Leistungskondensatoren bzw. deren Gehäuse beispielsweise speziell ausgestaltet und eine Überwachungsvorrichtung entsprechend angepasst werden, wie es beispielsweise in der älteren internationalen Patentanmeldung WO 2017/028992 A1 beschrieben ist. Dabei dient eine gezielte Volumenänderung des gasdichten Gehäuses des Leistungskondensators aufgrund eines erhöhten Gasdrucks in dem Gehäuseinnenraum dazu, einen solchen Fehlerfall zu erfassen.

In Antriebssträngen älterer bzw. bereits seit vielen Jahren in Betrieb befindlicher Schienenfahrzeuge erfolgt eine solche Überwachung der Leistungskondensatoren bislang noch nicht. Auch sind diese nicht speziell für eine solche Überwachung vorbereitet. Bei einer typischen Betriebsdauer eines Schienenfahrzeugs von bis zu dreißig Jahren ist es für deren sicheren Betrieb jedoch ebenso von Interesse, den Zustand der bereits installierten Leistungskondensatoren überwachen zu können. Ein Austausch der Leistungskondensatoren durch solche, die speziell für eine Überwachung vorbereitet sind, sollte dabei jedoch vermieden werden, da dieser hohe Kosten sowie einen Ersatz voll funktionsfähiger Komponenten des Antriebsstrangs zur Folge hätte.

Aus dem Dokument KR 2013 0076389 A ist eine Messeinrichtung für einen inneren Druck eines elektrochemischen Kondensators bekannt, bei welcher in einem Gehäuseblock zumindest eine Aufnahmekammer für eine Zelle, ein zylindrischer Raum sowie eine Druckübertragungsröhre vorgesehen ist. Ein mit dem Gehäuseblock verbundener Drucksensor ist über den Raum und die Druckübertragungsröhre mit der Aufnahmekammer verbunden, sodass ein in der Aufnahmekammer entstehender Druck zu dem Drucksensor geführt wird.

Aufgabe der Erfindung ist es daher, eine verlässliche Überwachung von nicht speziell hierfür vorbereiteten Leistungskondensatoren zu ermöglichen.

Diese Aufgabe wird durch die Vorrichtung sowie den Adapter gemäß den unabhängigen Patentansprüchen gelöst.

Weiterbildungen sind in jeweiligen abhängigen Patentansprüchen angegeben.

Eine erfindungsgemäße Vorrichtung zur Überwachung eines Z P Leistungskondensators wird nach den Merkmalen des Anspruchs 1 definiert, wobei der Leistungskondensator ein Gehäuse aufweist, dessen Gehäuseinnenraum an zumindest einer Gehäuseöffnung gasdicht verschließbar ist, umfasst zumindest eine Sensoreinrichtung, welche abhängig von einem Gasdruck in dem Gehäuse ein elektrisches Signal ausgibt, und einen Adapter, welcher die Sensoreinrichtung mechanisch mit dem Gehäuse an der Gehäuseöffnung und fluidisch mit dem Gehäuseinnenraum verbindet, wobei der Adapter einen in eine Mehrzahl funktionale Längenabschnitte unterteilten zylindrischen Adapterkörper und eine sich über die Mehrzahl Längenabschnitte erstreckende Durchführung für die fluidische Verbindung aufweist, wobei ein erster Längenabschnitt des Adapterkörpers, welcher nach Verbinden des Adapters mit dem Gehäuse im Bereich der Gehäuseöffnung angeordnet ist, die Durchführung in einer Ebene senkrecht zu einer Längsachse des Adapterkörpers abschließt und in zumindest einer Ebene parallel zu der Längsachse mit dem Gehäuseinnenraum fluidisch verbindet.

Leistungskondensatoren, wie sie bereits seit vielen Jahren in Stromrichtern von Schienenfahrzeugen eingesetzt werden, weisen typischerweise ein zylindrisches Gehäuse mit einem kreisrunden oder prismatischen Querschnitt auf. Das Gehäuse ist aus gasdicht verschweißte Aluminium- oder Edelstahlblechen gefertigt, sodass es eine becherförmige Grundform aufweist. In dem Gehäuse sind ein oder mehrere Wickel metallisierter Folie angeordnet, welche mit an dem Gehäuseboden angeordneten elektrischen Anschlüssen über Kupferlitzen oder Kupferbänder elektrisch verbunden sind. Das Gehäuse ist mittels eines Gehäusedeckels aus beispielsweise dem gleichen Material wie das Gehäuse wiederum durch Verschweißen gasdicht verschlossen. Üblicherweise weist der Gehäusedeckel bzw. eine andere Gehäusewand eine kleinere verschließbare Gehäuseöffnung auf, welche bei der Herstellung des Leistungskondensators einem Einbringen von Füllmaterial in den Gehäuseinnenraum dient. Als Füllmaterial wird beispielsweise eine sich verhärtende Vergussmasse verwendet, welche sowohl einer mechanischen Stabilisierung als auch einer elektrischen Isolierung des bzw. der Folienwickel gegenüber dem metallischen Gehäuse dient. Die Gehäuseöffnung weist üblicherweise ein Innengewinde auf, in welches ein entsprechender Verschlussdeckel eingeschraubt ist, um das Gehäuse wiederum gasdicht zu verschließen.

Eine solche Gehäuseöffnung ist grundsätzlich dafür geeignet, eine Sensoreinrichtung, mit welcher der Gasdruck im Gehäuseinnenraum des Leistungskondensators überwacht wird, anstelle des Verschlussdeckels zu montieren. Als Sensoreinrichtung eignet sich beispielsweise ein bekannter Druckschalter für industrielle Anwendungen. Dieser weist üblicherweise einen zylindrischen Körper mit einer Öffnung an einem Längsende des Körpers auf, über welche ein Sensor, beispielsweise eine Membran, mit Druck eines Fluids, beispielsweise einem Gas, beaufschlagt wird.

Bei der Montage einer solchen Druckschalters als Sensoreinrichtung an der Gehäuseöffnung kann jedoch nachteilig nicht sichergestellt werden, dass dessen Öffnung nicht durch im Bereich der Gehäuseöffnung befindliche Vergussmasse zumindest teilweise verschlossen wird, sodass aufgrund einer fehlenden fluiden Verbindung des Sensors mit der Atmosphäre des Gehäuseinnenraums eine Änderung des Gasdrucks in dem Gehäuse von dem Sensor nicht erfasst werden kann. Von einem mechanischen Entfernen von Vergussmasse in diesem Bereich, welches dieses Problem beheben könnte, ist jedoch abzusehen, um die Betriebssicherheit des Leistungskondensators zu gewährleisten.

Erfindungsgemäß ist in der Vorrichtung daher ein Adapter, der nach den Merkmalen des Anspruchs 9 definiert ist, vorgesehen, welcher sowohl eine mechanische Verbindung der Sensoreinrichtung mit einer Gehäuseöffnung des Gehäuses als auch eine verlässliche fluidische Verbindung der Sensoreinrichtung mit dem Gehäuseinnenraum herstellen kann. Der fluidischen Verbindung dient dabei eine Durchführung, welche sich über den in mehrere Längenabschnitte unterteilten Adapterkörper erstreckt. Um ein vorstehend beschriebenes Verschließen der Durchführung durch Vergussmasse bei Montage des Adapters an der Gehäuseöffnung zu verhindern, ist die Durchführung in einem ersten Längenabschnitt des Adapterkörpers, welcher der fluidischen Verbindung zum Gehäuseinnenraum dient, in einer senkrecht zu der Längsachse des Adapterkörpers verlaufenden Ebene abgeschlossen.

Der Adapterkörper kann hierfür beispielsweise derart verwirklicht sein, dass die mehreren Längenabschnitte entlang einer zentralen Längsachse des zylindrischen Adapterkörpers angeordnet sind und dass die Durchführung zentral und mit einem bestimmten einheitlichen Durchmesser entlang der Längsachse in dem Adapterkörper verläuft. An einem ersten Ende des Adapterkörpers, an welchem dieser mit dem Gehäuse des Kondensators mechanisch verbunden wird, ist die Durchführung durch einen in einer Ebene senkrecht zu der Längsachse angeordneten Teil des Adapterkörpers abgeschlossen. Bei der Montage des Adapters an der Gehäuseöffnung bzw. der Anordnung des ersten Längenabschnitts des Adapterkörpers im Bereich der Gehäuseöffnung wird hierdurch vorteilhaft vermieden, dass die Durchführung in unmittelbaren Kontakt mit dem Füllmaterial bzw. der Vergussmasse kommt und durch diese möglicherweise verschlossen wird.

Die fluidische Verbindung der Durchführung mit der Atmosphäre des Gehäuseinnenraums wird hingegen durch beispielsweise eine oder mehrere Adapteröffnungen hergestellt, welche in einer oder mehreren Ebenen parallel zu der Längsachse des Adapterkörpers und in einem Abstand zu dem in senkrechter Ebene abschließenden Teil des Adapterkörpers angeordnet sind. Sofern der erste Längenabschnitt einen kreisrunden Querschnitt aufweist, sind vorzugsweise mehrere Adapteröffnungen über den Umfang des Längenabschnitts verteilt angeordnet und beispielsweise als Bohrungen einheitlichen Durchmessers ausgeführt. In gleicher Weise können die Adapteröffnungen verteilt angeordnet sein, wenn der Querschnitt des ersten Längenabschnitts einen prismatischen Querschnitt mit einer Mehrzahl ebener Seitenflächen aufweist, wobei beispielsweise an jeder Seitenfläche eine Adapteröffnung angeordnet ist. Alternativ zu Bohrungen einheitlichen Durchmessers können Adapteröffnungen beispielsweise auch jeweils einen sich zu der Durchführung hin verjüngenden rechteckigen Querschnitt aufweisen. Eine Längsachse der Adapteröffnungen ist vorzugsweise senkrecht zu der Längsachse der Durchführung ausgerichtet, kann alternativ jedoch auch einen bestimmten Winkel zu dieser aufweisen und beispielsweise ausgehend von der Durchführung in Richtung des Gehäuseinnenraums ausgerichtet sein.

Einer Ausgestaltung der Vorrichtung zufolge weist ein sich an den ersten Längenabschnitt anschließender zweiter Längenabschnitt des Adapterkörpers, welcher der mechanischen Verbindung mit dem Gehäuse dient, ein Außengewinde auf, welches mit einem Innengewinde der Gehäuseöffnung kompatibel ist.

Der zweite Längenabschnitt, welcher auch als Außengewindeabschnitt bezeichnet werden kann, ist in Richtung der Längsachse des zylindrischen Adapterkörpers betrachtet somit unterhalb des ersten Längenabschnitts angeordnet. Der Durchmesser des zweiten Längenabschnitts sowie dessen Außengewinde sind derart ausgestaltet, dass sie mit dem Durchmesser der Gehäuseöffnung des Gehäuses des Leistungskondensators bzw. mit deren Innengewinde kompatibel sind und damit eine dauerhafte Schraubverbindung bzw. mechanische Verbindung des Adapters mit dem Gehäuse ermöglichen. Beispielsweise weist die Gehäuseöffnung des vorstehend beschriebenen bekannten Leistungskondensators ein 1/2" Innengewinde auf, sodass der zweite Längenabschnitt entsprechend ein 1/2" Außengewinde aufweist. Eine Länge des Außengewindes in Richtung der Längsachse entspricht beispielsweise im Wesentlichen der korrespondierenden Länge des Innengewindes der Gehäuseöffnung. Insbesondere kann das Außengewinde des zweiten Längenabschnitts jedoch auch eine kleinere Länge aufweisen, wenn diese für eine sichere mechanische Verbindung des Adapters mit dem Gehäuse des Leistungskondensators bereits ausreichend ist.

Einer auf der vorstehenden Ausgestaltung basierenden weiteren Ausgestaltung der Vorrichtung zufolge weist der erste Längenabschnitt einen Außendurchmesser auf, welcher kleiner als der Außendurchmesser des zweiten Längenabschnitts ist.

Insbesondere wenn, wie vorstehend beschrieben, die Länge des Außengewindes des zweiten Längenabschnitts kleiner als die Länge des Innengewindes der Gehäuseöffnung ist, sind die Adapteröffnungen des ersten Längenabschnitts nach Montage des Adapters an der Gehäuseöffnung teilweise oder vorzugsweise vollständig innerhalb der Gehäuseöffnung bzw. im Bereich des Innengewindes der Gehäuseöffnung angeordnet. Vorteilhaft kann durch diese Anordnung ergänzend sichergestellt werden, dass die Adapteröffnungen in einem Bereich des Gehäuses des Leistungskondensators angeordnet sind, welcher frei von Füllmaterial bzw. Vergussmasse ist. Vorzugsweise entspricht die gemeinsame Länge des ersten und zweiten Längenabschnitts weitgehend der Länge des Innengewindes der Gehäuseöffnung bzw. ist die gemeinsame Länge nicht größer als die entsprechende Länge des zuvor in der Gehäuseöffnung angeordneten Verschlussdeckels.

Einer auf einer der beiden vorstehenden Ausgestaltungen basierenden weiteren Ausgestaltung der Vorrichtung zufolge dient ein sich an den zweiten Längenabschnitt anschließender dritter Längenabschnitt des Adapterkörpers einem Befestigen des Adapters an dem Gehäuse.

Der dritte Längenabschnitt, welcher auch als Werkzeugabschnitt bezeichnet werden kann, ist in Richtung der Längsachse des zylindrischen Adapterkörpers betrachtet unterhalb des ersten Längenabschnitts angeordnet. Beispielsweise weist dieser Abschnitt einen prismatischen, insbesondere sechseckigen, Querschnitt auf, an welchen ein geeigneter Schraubenschlüssel für ein Einschrauben des Adapters in die Gehäuseöffnung durch eine Montagefachkraft angesetzt werden kann.

Einer auf der vorstehenden Ausgestaltung basierenden weiteren Ausgestaltung der Vorrichtung weist der dritte Längenabschnitt einen Außendurchmesser auf, welcher größer als ein Außendurchmesser des zweiten Längenabschnitts ist.

Durch diesen zumindest im Bereich des zweiten Längenabschnitts größeren Außendurchmesser wird vorteilhaft ein umlaufender Absatz in radialer Richtung geschaffen, an welchem ein Dichtring angeordnet werden kann. Ein solcher Dichtring aus beispielsweise einem elastischen Material, beispielsweise einem Kunststoff, dient vorzugsweise dazu, das Gehäuse gegenüber dem Adapterkörper abzudichten und damit eine Gasdichtigkeit des Gehäuses zu gewährleisten. Bei der Montage des Adapters durch Verschrauben des Außengewindes des zweiten Längenabschnitts mit dem Innengewinde der Gehäuseöffnung übt der Absatz eine mechanische Kraft in Richtung der Längsachse flächig auf den Dichtring aus, wodurch dieser zwischen dem Absatz und dem Außenrand der Gehäuseöffnung verpresst wird. Beispielsweise kann in dem Absatz ergänzend eine umlaufende Nut vorgesehen sein, um bei der Montage eine bestimmte Lage des Dichtrings sicherzustellen.

Einer auf einer der beiden vorstehenden Ausgestaltungen basierenden weiteren Ausgestaltung der Vorrichtung zufolge weist ein sich an den dritten Längenabschnitt anschließender vierter Längenabschnitt, welcher der mechanischen Verbindung der Sensoreinrichtung mit dem Adapterkörper dient, eine Schnittstelle auf, welche mit einer Schnittstelle der Sensoreinrichtung kompatibel ist.

Die Schnittstellen der Sensoreinrichtung und des vierten Längenabschnitts sind beispielsweise wiederum als ein Außengewinde bzw. als ein Innengewinde ausgestaltet. Das Innengewinde des vierten Längenabschnitts ist dabei vorzugsweise als Teil der Durchführung des Adapterkörpers ausgebildet bzw. in diese eingeschnitten, sodass die mit einem Außengewinde versehene Sensoreinrichtung bzw. deren Öffnung, über welche der Sensor bzw. eine Membran mit Druck beaufschlagt wird, direkt in die Durchführung hineinragt. Entsprechend kann der vierte Längenabschnitt des Adapterkörpers auch als Innengewindeabschnitt bezeichnet werden.

Bei einem typischen 1/4" Außengewinde der Sensoreinrichtung und beispielsweise einem 1/2" Innengewinde der Gehäuseöffnung des Gehäuses des Leistungskondensators, wie vorstehend beschrieben, kann der erfindungsgemäße Adapter somit auch die Funktion eines Größenadapters erfüllen.

Die Form des Querschnitts des vierten Längenabschnitts entspricht bis auf das Innengewinde vorzugsweise der des dritten Längenabschnitts bzw. ist der vierte Längenabschnitt auch als ein Teil des dritten Längenabschnitts ausgestaltet. Vorteilhaft kann hierdurch die Gesamtlänge des Adapters reduziert werden, wodurch die Montage der Vorrichtung auch bei beschränkten Platzverhältnissen ermöglicht wird. Dies ist insbesondere von Bedeutung, da in Stromrichtern von Bestandsfahrzeugen üblicherweise kein spezieller Raum für die Anordnung einer Vorrichtung zur Überwachung der Leistungskondensatoren vorgesehen ist.

Einer weiteren Ausgestaltung der Vorrichtung zufolge umfasst die Sensoreinrichtung zumindest einen Druckschalter, welcher mechanisch mit dem Adapter verbunden ist und welcher bei einem einen vorgegebenen Schwellwert überschreitenden Gasdruck eine elektrische Verbindung schließt oder unterbricht.

Wie vorstehend bereits ausgeführt, weist ein Druckschalter beispielsweise eine federbelastete Membran aus insbesondere Edelstahl auf. Bei Erreichen eines einstellbaren Auslösedrucks schaltet bzw. schließt oder öffnet der Druckschalter eine elektrische Verbindung, welche an zwei elektrischen Anschlüssen des Druckschalters anliegt.

Einer zu der vorstehenden Ausgestaltung alternativen weiteren Ausgestaltung der Vorrichtung zufolge umfasst die Sensoreinrichtung zumindest einen Drucksensor, welcher mechanisch mit dem Adapter verbunden ist und welcher bei einem einen vorgegebenen Schwellwert überschreitenden Gasdruck ein elektrisches Signal generiert.

Sensoreinrichtungen entsprechend den beiden vorstehenden Ausgestaltungen sind in besonderer Weise geeignet, den Gasdruck im Gehäuseinnenraum eines Leistungskondensators zu überwachen. Eine Auswertung von Signalen der Sensoreinrichtungen bzw. von diesen ausgelöste Änderungen eines Stromflusses können beispielsweise von einer zentralen Auswerteeinrichtung erfasst und ausgewertet werden, wobei diese vorzugsweise ausgestaltet ist, alle mit einer erfindungsgemäßen Vorrichtung ausgestatteten Leistungskondensatoren eines Stromrichters zu überwachen.

Ein erfindungsgemäßer Adapter für eine erfindungsgemäße Vorrichtung zur Überwachung eines Leistungskondensators wird nach den Merkmalen des Anspruchs 9 definiert, wobei der Leistungskondensator ein Gehäuse aufweist, dessen Gehäuseinnenraum an zumindest einer Gehäuseöffnung gasdicht verschließbar ist, ist ausgestaltet, eine Sensoreinrichtung mechanisch mit dem Gehäuse an der Gehäuseöffnung und fluidisch mit dem Gehäuseinnenraum zu verbinden, wobei der Adapter einen in eine Mehrzahl funktionale Längenabschnitte unterteilten zylindrischen Adapterkörper und eine sich über die Mehrzahl Längenabschnitte erstreckende Durchführung für die fluidische Verbindung aufweist, und wobei ein erster Längenabschnitt des Adapterkörpers, welcher nach Verbinden des Adapters mit dem Gehäuse im Bereich der Gehäuseöffnung angeordnet ist, die Durchführung in einer Ebene senkrecht zu einer Längsachse des Adapterkörpers abschließt und in zumindest einer Ebene parallel zu der Längsachse mit dem Gehäuseinnenraum fluidisch verbindet.

Einer Ausgestaltung des Adapters zufolge weist ein sich an den ersten Längenabschnitt anschließender zweiter Längenabschnitt des Adapterkörpers, welcher der mechanischen Verbindung mit dem Gehäuse dient, ein Außengewinde auf, welches mit einem Innengewinde der Gehäuseöffnung kompatibel ist. Dabei weist der erste Längenabschnitt vorzugsweise einen Außendurchmesser auf, welcher kleiner als der Außendurchmesser des zweiten Längenabschnitts ist.

Das Außengewinde des zweiten Längenabschnitts kann dabei identisch dem Innengewinde des vierten Längenabschnitts sein oder sich von diesem unterscheiden. So weisen beispielsweise sowohl der zweite Längenabschnitt als auch der vierte Längenabschnitt ein 1/4" oder ein 1/2" Außengewinde bzw. Innengewinde auf. Alternativ weist der zweite Längenabschnitt beispielsweise ein 1/2" Außengewinde auf, während der vierte Längenabschnitt ein 1/4" Innengewinde aufweist, wie vorstehend bereits erwähnt. Vorteilhaft kann der Adapterkörper in einfacher Weise an die vorgegebenen Abmaße bzw. Durchmesser der Gehäuseöffnung sowie der Sensoreinrichtung angepasst werden.

Einer auf der vorstehenden Ausgestaltung basierenden weiteren Ausgestaltung des Adapters zufolge dient ein sich an den zweiten Längenabschnitt anschließender dritter Längenabschnitt des Adapterkörpers einem Befestigen des Adapters an dem Gehäuse. Dabei weist der dritte Längenabschnitt vorzugsweise einen Außendurchmesser auf, welcher größer als ein Außendurchmesser des zweiten Längenabschnitts ist.

Einer auf der vorstehenden Ausgestaltung basierenden weiteren Ausgestaltung des Adapters zufolge weist ein sich an den dritten Längenabschnitt anschließender vierter Längenabschnitt, welcher der mechanischen Verbindung des Adapterkörpers mit der Sensoreinrichtung dient, eine mechanische Schnittstelle auf, welche mit einer Schnittstelle der Sensoreinrichtung kompatibel ist.

Einer weiteren Ausgestaltung des Adapters zufolge ist dieser aus einem Metall, insbesondere aus Edelstahl oder Messing, gefertigt.

Vorteilhaft kann der Adapter bzw. können dessen spezielle Ausprägungen in den jeweiligen Längenabschnitten durch maschinelle Bearbeitung eines metallischen zylindrischen bzw. prismatischen Grundkörpers hergestellt werden. Der Adapter ist hierdurch kostengünstig herstellbar und weist insbesondere aufgrund der Tatsache, dass er aus einem einzigen Metallkörper hergestellt werden kann, eine hohe Haltbarkeit und Gasdichtheit auf.

Ausführungsbeispiele einer erfindungsgemäßen Überwachungsvorrichtung sowie eines erfindungsgemäßen Adapters werden nachfolgend bezugnehmend auf Zeichnungen erläutert. Dabei zeigen:
- FIG 1: einen Triebzug als beispielhaftes Schienenfahrzeug,
- FIG 2: einen mit einem Gehäuse eines Leistungskondensators und einer Sensoreinrichtung verbundener Adapter, und
- FIG 3: eine spezifische Ausgestaltung des erfindungsgemäßen Adapters.

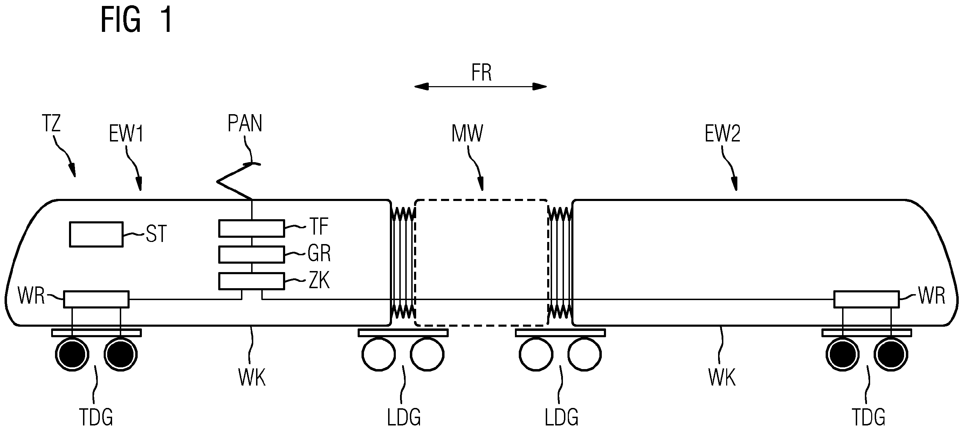

FIG 1 zeigt schematisch ein Schienenfahrzeug, welches beispielhaft als ein Triebzug TZ für den Personentransport ausgestaltet ist. Der Triebzug TZ umfasst eine Mehrzahl Wagen, wobei zwischen einem ersten und einem zweiten Endwagen EW eine Anzahl Mittelwagen MW angeordnet sind, von denen in der FIG 1 lediglich einer vereinfacht dargestellt sind. Die Wagen sind in Fahrtrichtung FR hintereinander angeordnet mit mittels geeigneter Wagenkupplungen mechanisch miteinander verbunden. Jeder der Wagen verfügt über einen Wagenkasten WK, wobei vorzugsweise alle Wagenkästen WK einen Fahrgastraum für den Aufenthalt von Fahrgästen bereitstellen. Zwischen den Wagen sind Wagenübergänge vorgesehen, über welche sich Fahrgäste zwischen benachbarten Wagen bzw. über die gesamte Länge des Triebzugs bewegen können.

Die Wagenkästen WK stützen sich jeweils über Drehgestelle auf Schienen eines Gleises ab. An jedem Wagenkasten sind beispielhaft jeweils zwei Drehgestelle angeordnet, wobei benachbarte Wagenkästen WK beispielhaft auf so genannten Jakobs-Drehgestellen abgestützt sind. Die Drehgestelle sind als Triebdrehgestelle TDG mit zumindest einem angetriebenen Radsatz oder als Laufdrehgestelle LDG mit ausschließlich nicht angetriebenen Radsätzen ausgestaltet. Gemäß der fachüblichen Kennzeichnung angetriebener Radsätze durch Ausfüllen der schematisch dargestellten Räder sind an den Endwagen EW des Triebzugs TZ jeweils ein Triebdrehgestell TDG mit jeweils zwei angetriebenen Radsätzen sowie ein jeweiliges Laufdrehgestell LDG angeordnet. Der bzw. die Mittelwagen MW stützen sich somit ausschließlich auf Laufdrehgestellen ab. Alternativ zu dem dargestellten Triebzug TZ mit mehreren Mittelwagen MW kann dieser lediglich die beiden Endwagen EW umfassen, an welchen entsprechend der FIG 1 Triebdrehgestelle TDG und ein oder zwei Laufdrehgestelle LDG angeordnet sind. Ebenso kann das Schienenfahrzeug auch als eine Lokomotive ausgestaltet sein, deren Wagenkasten sich ausschließlich auf Triebdrehgestellen abstützt.

In den Endwagen EW des Triebzugs TZ sind schematisch Komponenten des elektrischen Antriebssystems bzw. eines Antriebsstrangs angegeben. Diese Komponenten sind üblicherweise in speziellen Bereichen innerhalb des Wagenkastens WK, im Unterflurbereich, im Dachbereich oder auch über mehrere Wagen verteilt angeordnet. Weitere Komponenten des Antriebssystems wie beispielsweise eine oder mehrere Traktionsbatterien oder für den Betrieb der Komponenten sowie den Fahrgastkomfort erforderliche Hilfsbetriebe sind in der FIG 1 nicht dargestellt.

Über einen im Dachbereich des ersten Endwagens EW1 angeordneten Stromabnehmer PAN ist der beispielhafte Antriebsstrang des Triebzugs TZ mit einer nicht dargestellten Oberleitung eines Bahnversorgungsnetzes elektrisch verbindbar, wobei die Oberleitung einen Einphasenwechselstrom mit einer Spannung von 15kV bei 16.7Hz oder 25kV bei 50Hz führt. Dieser Wechselstrom wird einer netzseitigen Primärwicklung eines Transformators TF zugeführt, welcher das netzseitige Spannungsniveau auf ein niedrigeres Spannungsniveau heruntertransformiert. Eine Sekundärwicklung des Transformators TF ist mit einem netzseitigen Stromrichter, beispielsweise einem Gleichrichter GR bzw. Vierquadrantensteller, verbunden, welcher die anliegende Wechselspannung in eine Gleichspannung wandelt und einen Gleichspannungszwischenkreis ZK speist. Der Gleichspannungszwischenkreis ZK dient nach dem Beispiel der FIG 1 einer Speisung von zwei motorseitigen Stromrichtern, beispielsweise Pulswechselrichtern WR1, WR2, welche die Gleichspannung des Gleichspannungszwischenkreises ZK jeweils in eine Dreiphasenwechselspannung variabler Frequenz und Amplitude wandeln, mit welcher die Statorwicklungen der jeweiligen Antriebsmotoren in den Triebdrehgestellen TDG1 bzw. TDG2 gespeist werden. Gesteuert wird die Funktion insbesondere der Stromrichter GR, WR1, WR2 beispielsweise von einer zentralen Steuereinrichtung ST des Antriebssystems.

Das Antriebssystem des Triebzugs TZ kann alternativ oder ergänzend auch mit einer Oberleitung oder einer Stromschiene, welche einen Gleichstrom mit einem Spannungsniveau von beispielsweise 3kV oder 1.5kV führt, über einen entsprechenden Stromabnehmer elektrisch verbunden werden. In diesem Fall kann der Gleichspannungszwischenkreis ZK beispielsweise direkt bzw. über einen Gleichspannungswandler, welcher das Spannungsniveau des Bahnversorgungsnetzes auf ein gewünschtes Spannungsniveau des Gleichspannungszwischenkreises wandelt, gespeist werden. Ferner kann das Antriebssystem des Triebzugs TZ alternativ oder ergänzend auch mittels einer oder mehrerer Traktionsbatterien und/oder Brennstoffzellensystemen mit elektrischer Energie versorgt werden, wobei der Gleichspannungszwischenkreis beispielsweise wiederum über einen Gleichspannungswandler gespeist wird.

In dem Gleichspannungszwischenkreis ZK dient eine Anzahl bzw. eine Mehrzahl parallelgeschalteter Leistungskondensatoren einer Speicherung elektrischer Energie, welche dem motorseitigen Stromrichter zugeführt wird. Die Leistungskondensatoren können dabei in einem Gehäuse des netzseitigen bzw. des motorseitigen Stromrichters oder auch in einem gesonderten Gehäuse in Form einer so genannten Kondensatorbank angeordnet sein.

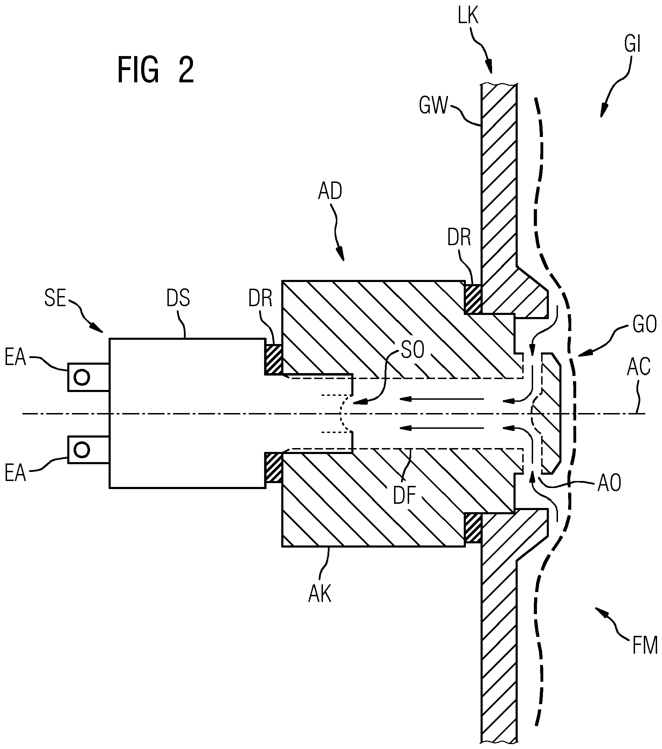

FIG 2 zeigt schematisch eine Schnittansicht eines erfindungsgemäßen Adapters AD, welcher einerseits an einer Gehäuseöffnung GO des Gehäuses eines Leistungskondensators LK angeordnet ist, und an welchen andererseits eine Sensoreinrichtung SE in Form eines Druckschalters DS angeordnet ist. Von dem Gehäuse des Leistungskondensators LK ist dabei nur eine Gehäusewand GW, in welcher die Gehäuseöffnung GO angeordnet ist, dargestellt. Diese Gehäusewand GW beispielsweise ein Gehäusedeckel eines becherförmigen Gehäuses des Leistungskondensators LK. Das Gehäuse ist beispielsweise aus verschweißten Edelstahl- oder Aluminiumblechen hergestellt.

In dem Gehäuseinnenraum GI sind ein oder mehrere Kondensatorwickel angeordnet, welche elektrisch mit Anschlüssen an dem Gehäuse verbunden sind, wobei beide genannten Bestandteile des Leistungskondensators LK nicht speziell dargestellt sind. Im Bereich der Gehäusewand GW ist in dem Gehäuseinnenraum GI Füllmaterial FM in Form einer Vergussmasse angeordnet, wie es beispielhaft anhand der dicken gestrichelten Linie dargestellt ist. Das Füllmaterial FM ist bei der Herstellung des Leistungskondensators LK über die Gehäuseöffnung GO in den Gehäuseinnenraum GI eingefüllt worden und weist, nachdem es ausgehärtet ist, üblicherweise einen bestimmten, jedoch nicht einheitlichen bzw. variierenden Abstand zu der Gehäusewand GW auf. Insbesondere in dem dadurch gebildeten Raum bildet sich, wie einleitend beschrieben, über die Betriebsdauer des Leistungskondensators LK eine gasförmige Atmosphäre aus Pyrolysegasen.

Im Bereich der bzw. rund um die Gehäuseöffnung GO weist das Material der Gehäusewand GW beispielsweise eine größere Dicke auf. Dieser dient einerseits einer größeren Stabilität der Gehäusewand GW in diesem Bereich, andererseits dient dieser dem Einschneiden eines Innengewindes, um die Gehäuseöffnung GO nach Befüllen des Gehäuses mit Füllmaterial FM mittels eines Verschlussdeckels gasdicht abschließen zu können. Die größere Dicke kann beispielsweise durch Einschweißen eines metallischen Rings mit einem bereits vorgefertigten Innengewinde oder durch Tiefziehen des Gehäusewandmaterials an dieser Stelle erzielt werden. In der Darstellung der FIG 2 ist ein solcher Verschlussdeckel entfernt und durch einen erfindungsgemäßen Adapter AD ersetzt worden.

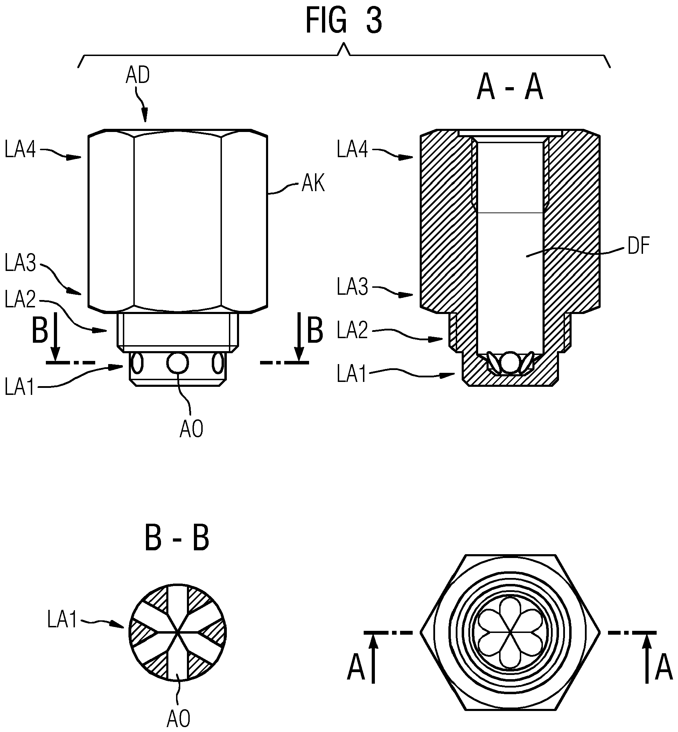

Der Adapter AD besteht aus einem beispielsweise ebenfalls aus Edelstahl hergestellten zylindrischen Adapterkörper AK. Dieser weist mehrere Längenabschnitte, wie sie nachfolgend in FIG 3 noch detaillierter dargestellt sind, entlang einer Längsachse AC auf. Ein erster Längenabschnitt weist einen kreisrunden Querschnitt auf, über dessen Umfang verteilt mehrere Adapteröffnungen AO angeordnet sind. Diese Adapteröffnungen AO verbinden die Gasatmosphäre in dem Gehäuseinnenraum GI mit einer zentralen Durchführung DF in dem Adapterkörper AK, wie anhand der Strömungspfeile beispielhaft dargestellt ist. Die Adapteröffnungen AO und die zentrale Durchführung DF sind mittels gestrichelter Linien dargestellt.

Eine fluidische Verbindung der Durchführung DF des Adapters AD mit der Gasatmosphäre in dem Gehäuseinnenraum GI wird dadurch sichergestellt, dass einerseits die Adapteröffnungen AO in dem Bereich des Innengewindes der Gehäuseöffnung GO angeordnet sind, wobei aufgrund eines kleineren Außendurchmessers des ersten Längenabschnitts im Vergleich zu dem Innendurchmesser der Gehäuseöffnung GO ein bestimmter Abstand verwirklicht ist. Andererseits ist die Durchführung DF des Adapters AD im Bereich der Gehäuseöffnung GO in einer Ebene senkrecht zu der Längsachse AC bzw. parallel zu der Gehäusewand GW abgeschlossen. Dieser Abschluss mittels eines Teils des Adapterkörpers AK stellt sicher, dass bei der Anordnung des Adapters AD an der Gehäuseöffnung GO kein Füllmaterial FM in die Durchführung DF eindringen und diese dadurch blockieren kann.

Ein in Längsrichtung unterhalb des ersten Längenabschnitts angeordneter zweiter Längenabschnitt weist einen mit der Gehäuseöffnung GO kompatiblen Außendurchmesser sowie ein mit deren Innengewinde kompatibles Außengewinde auf, um den Adapter AD an dem Gehäuse des Leistungskondensators LK mechanisch zu befestigen. Um einen möglichen Austritts von Pyrolysegasen an die Umwelt ergänzend zu verhindern, ist ein Dichtring DR aus einem geeigneten Material zwischen einem dritten Längenabschnitt und der Gehäusewand GW angeordnet. Der dritte Längenabschnitt ist unterhalb des zweiten Längenabschnitts angeordnet und weist vorzugsweise einen größeren Außendurchmesser als der zweite Längenabschnitt auf. Durch den größeren Außendurchmesser entsteht ein umlaufender Absatz, mittels welchem beim Befestigen des Adapters AD an der Gehäuseöffnung GW eine Kraft in Längsrichtung auf den Dichtring DR ausgeübt und dieser entsprechend verpresst werden kann. Der Querschnitt des dritten Längenabschnitts ist vorzugsweise nicht kreisrund wie zumindest der zweiten Längenabschnitt, sondern prismatisch bzw. beispielsweise sechseckig. Diese Querschnittsform ermöglicht, einen Schraubenschlüssel passender Größe zum Einschrauben des Adapters AD in die Gehäuseöffnung GO verwenden zu können.

Ein vierter Längenabschnitt, welcher unterhalb des dritten Längenabschnitts angeordnet bzw. als Teil des dritten Längenabschnitts ausgestaltet ist, weist ein Innengewinde auf, welches in die Durchführung DF eingeschnitten ist. Das Innengewinde ist vorzugsweise nur in einem Teil der Länge der Durchführung DF bzw. nur in deren unteren Teil eingeschnitten, wobei die Länge dieses Teils ausreichend ist, um die Sensoreinrichtung SE bzw. den Druckschalter DS an dem Adapter AD zu befestigen.

Der Druckschalter DS weist ein Gehäuse auf, in welchem eine Membran bzw. ein Drucksensor angeordnet ist. Die Membran bzw. der Drucksensor ist über eine Sensoröffnung SO mit der Durchführung DF fluidisch verbunden, wodurch diese bzw. dieser mit dem in dem Gehäuseinnenraum GI herrschenden Gasdruck beaufschlagt wird. Das Gehäuse weist entsprechend dem Adapterkörper AK einen Absatz auf, mittels welchem beim Befestigen der Sensoreinrichtung SE an dem Adapter AD wiederum eine Kraft in Längsrichtung auf den Dichtring DR ausgeübt und dieser entsprechend verpresst werden kann, um einen möglichen Gasaustritt an dieser Schnittstelle zwischen Adapterkörper AK und Druckschalter DS zu verhindern. Der Druckschalter DS weist zwei elektrische Anschlüsse EA auf, an welchen elektrische Leitungen der Überwachungsvorrichtung angeschlossen werden. Vorzugsweise ist ein Schwellwert des Gasdrucks, bei welchem der Druckschalter DS schaltet, einstellbar. Abhängig von der Ausgestaltung des Druckschalters DS führt ein Erreichen bzw. Überschreiten eines eingestellten Schwellwertes aufgrund eines erhöhten Gasdrucks in dem Gehäuse des Leistungskondensators LK beispielsweise dazu, dass ein Stromkreis geschlossen wird. Das Schließen des Stromkreises und damit Fließen eines Stroms wird in einer Auswerteeinrichtung erfasst und aufgrund dessen von dieser beispielsweise ein Warnsignal ausgegeben, welches auf einen erhöhten Gasdruck in dem Leistungskondensator LK hinweist. Eine solche, nicht speziell dargestellte, Auswerteeinrichtung kann beispielsweise als Teil einer zentralen Steuereinrichtung des Schienenfahrzeugs oder als eine gesonderte Einheit verwirklicht sein.

FIG 3 zeigt schematisch verschiedene Ansichten eines beispielhaften erfindungsgemäßen Adapters AD. Dabei zeigt die obere linke Darstellung eine Draufsicht auf den Adapter AD, d.h. eine äußere Ansicht des Adapterkörpers AK. Aus dieser Ansicht sowie der unteren rechten Darstellung ist beispielsweise ersichtlich, dass der dritte und vierte Längenabschnitt LA3, LA4 des Adapterkörpers AK einen prismatischen bzw. sechseckigen Querschnitt aufweisen. Ferner ist aus der oberen linken und der oberen rechten Darstellung ersichtlich, dass der dritte Längenabschnitt LA3 gegenüber dem zweiten Längenabschnitt LA2 bzw. unterhalb dessen Außengewindes einen umlaufenden Absatz ausbildet. Die linke untere Darstellung zeigt einen Schnitt entlang der Schnittlinie B-B der oberen linken Darstellung. Aus dieser Ansicht ist insbesondere erkennbar, dass in dem ersten Längenabschnitt LA1 des Adapterkörpers AK umlaufend sechs Adapteröffnungen AO angeordnet sind, wobei die Adapteröffnungen AO jeweils die Form eines kreisrunden Lochs aufweisen, welche beispielsweise mittels einer Bohrung in den Adapterkörper AK hergestellt werden kann. Die obere rechte Darstellung zeigt einen Schnitt entlang der Schnittlinie A-A der unteren rechten Darstellung. Aus dieser Ansicht sind insbesondere das Innengewinde in dem vierten Längenabschnitt LA4, welches der mechanischen Verbindung mit der Sensoreinrichtung SE bzw. dem Druckschalter DS dient, sowie der Abschluss der zentralen Durchführung im unteren Bereich des ersten Längenabschnitts LA1 erkennbar. Die untere rechte Darstellung zeigt schließlich eine weitere Draufsicht, aus welcher der Querschnitt des vierten Längenabschnitts LA4 ersichtlich ist. Im Unterschied zu der Darstellung in FIG 2 weist der vierte Längenabschnitt LA 4 eine ergänzende Nut um die Durchführung DF bzw. um das Innengewinde auf, welche der Anordnung einer Dichtung dient.

### Bezugszeichen

- A-A: Schnittebene
- AC: Längsachse
- AD: Adapter
- AK: Adapterkörper
- AO: Adapteröffnung
- B-B: Schnittebene
- EW: Endwagen
- DF: Durchführung
- DR: Dichtring
- DS: Druckschalter
- EA: Elektrische Anschlüsse
- FM: Füllmaterial
- FR: Fahrtrichtung
- GI: Gehäuseinnenraum
- GO: Gehäuseöffnung
- GR: Gleichrichter
- GW: Gehäusewand
- LA1-LA4: Längenabschnitt
- LK: Leistungskondensator
- MW: Mittelwagen
- SO: Sensoröffnung
- PAN: Stromabnehmer
- SE: Sensoreinrichtung
- ST: Steuereinrichtung
- TDG: Triebdrehgestell
- TF: Transformator
- TZ: Triebzug
- WK: Wagenkasten
- WR: Wechselrichter
- ZK: Gleichspannungszwischenkreis

## Patentansprüche

1. Vorrichtung zur Überwachung eines Leistungskondensators (LK),wobei der Leistungskondensator (LK) ein Gehäuse aufweist, dessen Gehäuseinnenraum (GI) an zumindest einer Gehäuseöffnung (GO) gasdicht verschließbar ist, und
wobei die Vorrichtung zumindest eine Sensoreinrichtung (SE), welche abhängig von einem Gasdruck in dem Gehäuse ein elektrisches Signal ausgibt, und einen Adapter (AD), welcher die Sensoreinrichtung (SE) mechanisch mit dem Gehäuse an der Gehäuseöffnung (GO) und fluidisch mit dem Gehäuseinnenraum (GI) verbindet, umfasst,
wobei der Adapter (AD) einen in eine Mehrzahl funktionale Längenabschnitte (LA1-LA4) unterteilten zylindrischen Adapterkörper (AK) und eine sich über die Mehrzahl Längenabschnitte (LA1-LA4) erstreckende Durchführung (DF) für die fluidische Verbindung aufweist,
wobei ein erster Längenabschnitt (LA1) des Adapterkörpers (AK), welcher nach Verbinden des Adapters (AD) mit dem Gehäuse im Bereich der Gehäuseöffnung (GO) angeordnet ist, die Durchführung (DF) in einer Ebene senkrecht zu einer Längsachse (AC) des Adapterkörpers (AK) abschließt und in zumindest einer Ebene parallel zu der Längsachse (AC) mit dem Gehäuseinnenraum (GI) fluidisch verbindet.

2. Vorrichtung nach Anspruch 1, wobei
ein sich an den ersten Längenabschnitt (LA1) anschließender zweiter Längenabschnitt (LA2) des Adapterkörpers (AK), welcher der mechanischen Verbindung mit dem Gehäuse dient, ein Außengewinde aufweist, welches mit einem Innengewinde der Gehäuseöffnung (GO) kompatibel ist.

3. Vorrichtung nach Anspruch 2, wobei
der erste Längenabschnitt (LA1) einen Außendurchmesser aufweist, welcher kleiner als der Außendurchmesser des zweiten Längenabschnitts (LA2) ist.

4. Vorrichtung nach Anspruch 2 oder 3, wobei
ein sich an den zweiten Längenabschnitt (LA2) anschließender dritter Längenabschnitt (LA3) des Adapterkörpers (AK) einem Befestigen des Adapters (AD) an dem Gehäuse dient.

5. Vorrichtung nach Anspruch 4, wobei
der dritte Längenabschnitt (LA3) einen Außendurchmesser aufweist, welcher größer als ein Außendurchmesser des zweiten Längenabschnitts (LA2) ist.

6. Vorrichtung nach Anspruch 4 oder 5, wobei
ein sich an den dritten Längenabschnitt (LA3) anschließender vierter Längenabschnitt (LA4), welcher der mechanischen Verbindung der Sensoreinrichtung (SE) mit dem Adapterkörper (AK) dient, eine mechanische Schnittstelle aufweist, welche mit einer Schnittstelle der Sensoreinrichtung (SE) kompatibel ist.

7. Vorrichtung nach einem der Ansprüche 1 bis 6, wobei
die Sensoreinrichtung (SE) zumindest einen Druckschalter (DS) umfasst, welcher mechanisch mit dem Adapter (AD) verbunden ist und welcher bei einem einen vorgegebenen Schwellwert überschreitenden Gasdruck eine elektrische Verbindung schließt oder unterbricht.

8. Vorrichtung nach einem der Ansprüche 1 bis 6, wobei
die Sensoreinrichtung (SE) zumindest einen Drucksensor (DS) umfasst, welcher mechanisch mit dem Adapter (AD) verbunden ist und welcher bei einem einen vorgegebenen Schwellwert überschreitenden Gasdruck ein elektrisches Signal generiert.

9. Adapter (AD) für eine Vorrichtung zur Überwachung eines Leistungskondensators (LK) nach einem der Ansprüche 1 bis 8, wobei der Leistungskondensator (LK) ein Gehäuse aufweist, dessen Gehäuseinnenraum (GI) an zumindest einer Gehäuseöffnung (GO) gasdicht verschließbar ist,
wobei der Adapter (AD) ausgestaltet ist, eine Sensoreinrichtung (SE) mechanisch mit dem Gehäuse an der Gehäuseöffnung (GO) und fluidisch mit dem Gehäuseinnenraum (GI) zu verbinden,
wobei der Adapter (AD) einen in eine Mehrzahl funktionale Längenabschnitte (LA1-LA4) unterteilten zylindrischen Adapterkörper (AK) und eine sich über die Mehrzahl Längenabschnitte (LA1-LA3) erstreckende Durchführung (DF) für die fluidische Verbindung aufweist, und
wobei ein erster Längenabschnitt (LA1) des Adapterkörpers (AK), welcher nach Verbinden des Adapters (AD) mit dem Gehäuse im Bereich der Gehäuseöffnung (GO) angeordnet ist, die Durchführung (DF) in einer Ebene senkrecht zu einer Längsachse (AC) des Adapterkörpers (AK) abschließt und in zumindest einer Ebene parallel zu der Längsachse (AC) mit dem Gehäuseinnenraum (GI) fluidisch verbindet.

10. Adapter (AD) nach Anspruch 9, wobei
ein sich an den ersten Längenabschnitt (LA1) anschließender zweiter Längenabschnitt (LA2) des Adapterkörpers (AK), welcher der mechanischen Verbindung mit dem Gehäuse dient, ein Außengewinde aufweist, welches mit einem Innengewinde der Gehäuseöffnung (GO) kompatibel ist.

11. Adapter (AD) nach Anspruch 10, wobei
der erste Längenabschnitt (LA1) einen Außendurchmesser aufweist, welcher kleiner als der Außendurchmesser des zweiten Längenabschnitts (LA2) ist.

12. Adapter (AD) nach Anspruch 10 oder 11, wobei
ein sich an den zweiten Längenabschnitt (LA2) anschließender dritter Längenabschnitt (LA3) des Adapterkörpers (AK) einem Befestigen des Adapters (AD) an dem Gehäuse dient.

13. Adapter (AD) nach Anspruch 12, wobei
der dritte Längenabschnitt (LA3) einen Außendurchmesser aufweist, welcher größer als ein Außendurchmesser des zweiten Längenabschnitts (LA2) ist.

14. Adapter (AD) nach Anspruch 12 oder 13, wobei
ein sich an den dritten Längenabschnitt (LA3) anschließender vierter Längenabschnitt (LA4), welcher der mechanischen Verbindung des Adapterkörpers (AK) mit der Sensoreinrichtung (SE) dient, eine mechanische Schnittstelle aufweist, welche mit einer Schnittstelle der Sensoreinrichtung (SE) kompatibel ist.

15. Adapter (AD) nach einem der Ansprüche 9 bis 14, wobei
der Adapter (AD) aus einem Metall, insbesondere aus Edelstahl oder Messing, gefertigt ist.

## Claims

1. Apparatus for monitoring a power capacitor (LK), wherein the power capacitor (LK) has a housing, the housing interior (GI) of which can be closed off in a gas-tight manner at at least one housing opening (GO), and
wherein the apparatus comprises at least one sensor device (SE), which outputs an electrical signal as a function of a gas pressure in the housing, and an adapter (AD), which mechanically connects the sensor device (SE) to the housing at the housing opening (GO) and fluidically connects it to the housing interior (GI),
wherein the adapter (AD) has a cylindrical adapter body (AK) divided into a plurality of functional longitudinal sections (LA1-LA4) and a feed-through (DF) for the fluidic connection extending over the plurality of longitudinal sections (LA1-LA4),
wherein a first longitudinal section (LA1) of the adapter body (AK), which is arranged in the region of the housing opening (GO) after the connection of the adapter (AD) to the housing, caps off the feed-through (DF) in a plane perpendicular to a longitudinal axis (AC) of the adapter body (AK) and fluidically connects it to the housing interior (GI) in at least one plane parallel with the longitudinal axis (AC).

2. Apparatus according to claim 1, wherein
a second longitudinal section (LA2) of the adapter body (AK), which follows the first longitudinal section (LA1) and is used for the mechanical connection to the housing, has an external thread which is compatible with an internal thread of the housing opening (GO).

3. Apparatus according to claim 2, wherein
the first longitudinal section (LA1) has an external diameter which is less than the external diameter of the second longitudinal section (LA2).

4. Apparatus according to claim 2 or 3, wherein
a third longitudinal section (LA3) of the adapter body (AK), which follows the second longitudinal section (LA2), is used for fastening the adapter (AD) to the housing.

5. Apparatus according to claim 4, wherein
the third longitudinal section (LA3) has an external diameter which is greater than an external diameter of the second longitudinal section (LA2).

6. Apparatus according to claim 4 or 5, wherein
a fourth longitudinal section (LA4), which follows the third longitudinal section (LA3) and is used for the mechanical connection between the sensor device (SE) and the adapter body (AK), has a mechanical interface which is compatible with an interface of the sensor device (SE).

7. Apparatus according to one of claims 1 to 6, wherein
the sensor device (SE) comprises at least one pressure switch (DS), which is mechanically connected to the adapter (AD) and which, in the event of a gas pressure exceeding a predefined threshold value, closes or interrupts an electrical connection.

8. Apparatus according to one of claims 1 to 6, wherein
the sensor device (SE) comprises at least one pressure sensor (DS), which is mechanically connected to the adapter (AD) and which, in the event of a gas pressure exceeding a predefined threshold value, generates an electrical signal.

9. Adapter (AD) for an apparatus for monitoring a power
capacitor (LK) according to one of claims 1 to 8, wherein the power capacitor (LK) has a housing, the housing interior (GI) of which can be closed off in a gas-tight manner at at least one housing opening (GO),
wherein the adapter (AD) is embodied to mechanically connect a sensor device (SE) to the housing at the housing opening (GO) and fluidically connect it to the housing interior (GI), wherein the adapter (AD) has a cylindrical adapter body (AK) divided into a plurality of functional longitudinal sections (LA1-LA4) and a feed-through (DF) for the fluidic connection extending over the plurality of longitudinal sections (LA1-LA3), and
wherein a first longitudinal section (LA1) of the adapter body (AK), which is arranged in the region of the housing opening (GO) after the connection of the adapter (AD) to the housing, caps off the feed-through (DF) in a plane perpendicular to a longitudinal axis (AC) of the adapter body (AK) and fluidically connects it to the housing interior (GI) in at least one plane parallel with the longitudinal axis (AC).

10. Adapter (AD) according to claim 9, wherein
a second longitudinal section (LA2) of the adapter body (AK), which follows the first longitudinal section (LA1) and is used for the mechanical connection to the housing, has an external thread which is compatible with an internal thread of the housing opening (GO).

11. Adapter (AD) according to claim 10, wherein
the first longitudinal section (LA1) has an external diameter which is less than the external diameter of the second longitudinal section (LA2).

12. Adapter (AD) according to claim 10 or 11, wherein
a third longitudinal section (LA3) of the adapter body (AK), which follows the second longitudinal section (LA2), is used for fastening the adapter (AD) to the housing.

13. Adapter (AD) according to claim 12, wherein
the third longitudinal section (LA3) has an external diameter which is greater than an external diameter of the second longitudinal section (LA2).

14. Adapter (AD) according to claim 12 or 13, wherein
a fourth longitudinal section (LA4), which follows the third longitudinal section (LA3) and is used for the mechanical connection between the adapter body (AK) and the sensor device (SE), has a mechanical interface which is compatible with an interface of the sensor device (SE).

15. Adapter (AD) according to one of claims 9 to 14, wherein
the adapter (AD) is manufactured from a metal, in particular from stainless steel or brass.

## Revendications

1. Installation de contrôle d'un condensateur (LK) de puissance, dans laquelle le condensateur (LK) de puissance a une enveloppe, dont l'espace (GI) intérieur peut être fermé d'une manière étanche au gaz au moins à une ouverture (GO) de l'enveloppe, et
dans laquelle l'installation comprend un dispositif (SE) capteur, qui donne un signal électrique en fonction de la pression du gaz dans l'enveloppe, et un adaptateur (AD), qui relie mécaniquement le dispositif (SE) capteur à l'enveloppe à l'ouverture (GO) de l'enveloppe et qui communique fluidiquement avec l'espace (GI) intérieur de l'enveloppe,
dans laquelle l'adaptateur (AD) a un corps (AK) d'adaptateur cylindrique subdivisé en une pluralité de tronçons (LA1 - LA4) de longueur fonctionnels et une traversée (DF) pour la communication fluidique s'étendant sur la pluralité de tronçons (LA1 - LA4) de longueur,
dans laquelle un premier tronçon (LA1) de longueur du corps (AK) de l'adaptateur, qui est disposé, après la liaison de l'adaptateur (AD) à l'enveloppe, dans la partie de l'ouverture (GO) de l'enveloppe, ferme la traversée (DF) dans un plan perpendiculaire à un axe (AC) longitudinal du corps (AK) de l'adaptateur et communique fluidiquement, dans au moins un plan parallèlement à l'axe (AC) longitudinal, avec l'espace (GI) intérieur de l'enveloppe.

2. Installation suivant la revendication 1, dans laquelle
un deuxième tronçon (LA2) de longueur, se raccordant au premier tronçon (LA1) de longueur du corps (AK) de l'adaptateur et servant à la liaison mécanique avec l'enveloppe, a un filetage, qui est compatible avec un taraudage de l'ouverture (GO) de l'enveloppe.

3. Installation suivant la revendication 2, dans laquelle
le premier tronçon (LA1) de longueur a un diamètre extérieur, qui est plus petit que le diamètre extérieur du deuxième tronçon (LA2) de longueur.

4. Installation suivant la revendication 2 ou 3, dans laquelle un troisième tronçon (LA3) de longueur, se raccordant au deuxième tronçon (LA2) de longueur du corps (AK) de l'adaptateur, sert à une fixation de l'adaptateur (AD) à l'enveloppe.

5. Installation suivant la revendication 4, dans laquelle
le troisième tronçon (LA3) de longueur a un diamètre extérieur, qui est plus grand qu'un diamètre extérieur du deuxième tronçon (LA2) de longueur.

6. Installation suivant la revendication 4 ou 5, dans laquelle un quatrième tronçon (LA4) de longueur, se raccordant au troisième tronçon (LA3) de longueur et servant à la liaison mécanique du dispositif (SE) capteur au corps (AK) de l'adaptateur, a une interface mécanique, qui est compatible avec une interface mécanique du dispositif (SE) capteur.

7. Installation suivant l'une des revendications 1 à 6, dans laquelle
le dispositif (SE) capteur comprend au moins un interrupteur (DS) à pression, qui est relié mécaniquement à l'adaptateur (AD) et qui, si une pression du gaz dépasse une valeur de seuil donnée à l'avance, ferme ou interrompt la liaison électrique.

8. Installation suivant l'une des revendications 1 à 6, dans laquelle
le dispositif (SE) capteur comprend un capteur (DS) de pression, qui est relié mécaniquement à l'adaptateur (AD) et qui, si la pression du gaz dépasse une valeur de seuil donnée à l'avance, génère un signal électrique.

9. Adaptateur (AD) d'une installation de contrôle d'un condensateur (LK) de puissance suivant l'une des revendications 1 à 8,
dans lequel le condensateur (LK) de puissance a une enveloppe, dont l'espace (GI) intérieur peut être fermé d'une manière étanche au gaz à au moins une ouverture (GO) de l'enveloppe,
dans lequel l'adaptateur (AD) est conformé pour relier mécaniquement le dispositif (SE) capteur à l'enveloppe à l'ouverture (GO) de l'enveloppe et pour communiquer fluidiquement avec l'espace (GI) intérieur de l'enveloppe,
dans lequel l'adaptateur (AD) a un corps (AK) d'adaptateur cylindrique subdivisé en une pluralité de tronçons (LA1 - LA4) de longueur fonctionnels et une traversée (DF) pour la communication fluidique s'étendant sur la pluralité de tronçons (LA1 - LA3) de longueur,
dans lequel un premier tronçon (LA1) de longueur du corps (AK) de l'adaptateur, qui est disposé, après la liaison de l'adaptateur (AD) à l'enveloppe, dans la partie de l'ouverture (GO) de l'enveloppe, ferme la traversée (DF) dans un plan perpendiculaire à un axe (AC) longitudinal du corps (AK) de l'adaptateur et communique fluidiquement, dans au moins un plan parallèlement à l'axe (AC) longitudinal, avec l'espace (GI) intérieur de l'enveloppe.

10. Adaptateur (AD) suivant la revendication 9, dans lequel
un deuxième tronçon (LA2) de longueur, se raccordant au premier tronçon (LA1) de longueur du corps (AK) de l'adaptateur et servant à la liaison mécanique avec l'enveloppe, a un filetage, qui est compatible avec un taraudage de l'ouverture (GO) de l'enveloppe.

11. Adaptateur (AD) suivant la revendication 10, dans lequel
le premier tronçon (LA1) de longueur a un diamètre extérieur, qui est plus petit que le diamètre extérieur du deuxième tronçon (LA2) de longueur.

12. Adaptateur (AD) suivant la revendication 10 ou 11, dans lequel
un troisième tronçon (LA3) de longueur, se raccordant au deuxième tronçon (LA2) de longueur du corps (AK) de l'adaptateur, sert à une fixation de l'adaptateur (AD) à l'enveloppe.

13. Adaptateur (AD) suivant la revendication 12, dans lequel
le troisième tronçon (LA3) de longueur a un diamètre extérieur, qui est plus grand qu'un diamètre extérieur du deuxième tronçon (LA2) de longueur.

14. Adaptateur (AD) suivant la revendication 12 ou 13, dans lequel
un quatrième tronçon (LA4) de longueur, se raccordant au troisième tronçon (LA3) de longueur et servant à la liaison mécanique du dispositif (SE) capteur au corps (AK) de l'adaptateur, a une interface mécanique, qui est compatible avec une interface mécanique du dispositif (SE) capteur.

15. Adaptateur (AD) suivant l'une des revendications 9 à 14, dans lequel
l'adaptateur (AD) est un métal, en particulier en acier fin ou en laiton.
